# EUROPEAN PATENT SPECIFICATION

(11) **EP 2 680 152 B1**
(45) Date of publication and mention of the grant of the patent: **03.05.2017**
(21) Application number: 12305756.4
(22) Date of filing: 27.06.2012
(51) Int. Cl.: G06F 12/12

(54) **Process for managing the storage of a list of N items in a memory cache of C items of a cache system**
Verfahren zur Verwaltung des Speichers einer Liste von N-Items in einem Speichercache von C-Items eines Cachesystems
Procédé de gestion du stockage d'une liste de N éléments dans une mémoire cache de C éléments d'un système de mémoire cache

(43) Date of publication of application: 01.01.2014
(73) Proprietor: ALCATEL LUCENT, 92100 Boulogne-Billancourt (FR)
(72) Inventor: Carofiglio, Giovanna, 91620 Nozay (FR); Borst, Simon C., Murray Hill NJ 07974-0636 (US); Muscariello, Luca, 92290 Chatenay Malabry (FR)
(74) Representative: Berthier, Karine

(56) References cited:
- US-A1- 2011 010 502
- US-B1- 6 609 177
- MEGIDDO N ET AL: "Outperforming lRU with an adaptive replacement cache algorithm", COMPUTER, IEEE SERVICE CENTER, LOS ALAMITOS, CA, US, vol. 37, no. 4, 1 April 2004 (2004-04-01), pages 58-65, XP011112809, ISSN: 0018-9162, DOI: 10.1109/MC.2004.1297303

## Description

The invention relates to a process for managing the storage of a list of N items in a memory cache of C items of said list, such as a cache system comprising a memory cache for storing C items and means for implementing such a process.

The invention notably applies to cache systems comprising a finite size memory cache for storing a limited number of items, the content of said memory cache varying over time according to the item requests of users and to replacement criterions applied by said cache system.

In particular, the replacement criterions can be Least Recently Used (LRU) replacement criterions that rely for instance on the access frequency of items, so that items with the lowest access frequencies are removed from the memory cache whereas items with the highest access frequencies are placed at first ranks in said memory cache.

Cache systems are largely deployed in different environments, as for example in memory controllers or in web caching domains, as explained in the article "Web Caching and Replication" by M. RABINOVICH and O. SPATSCHECK (Addison Wesley, 1st edition 2002, ISBN 0-201-61570-3). Such cache systems are also currently employed in Content Delivery Networks (CDN), as explained in further details in the article "Content Delivery Networks: Status and Trends" by A. VAKALI and G. PALLIS (IEEE Internet Computing, 2003) and in the technical report "A Taxonomy and Survey of Content Delivery Networks" by M. PATHAN and R. BUYYA (GRIDS-TR-2007-4, Grid Computing and Distributed Systems Laboratory, University of Melbourne, Australia).

Indeed, in those environments, cache systems allow the distribution of storage capabilities into networks by storing the frequently accessed items in locations that are closed to the requesters. Thus, cache systems allow the implementation of traffic localization, which is highly encouraged because of the increasing bandwidth demand and the redundancy of requests for the most popular items.

For example, in a web network comprising a general web server, a web cache can be employed for storing web pages in a proxy server that is closer to a requesting user than said general server, and thus for reducing the amount of traffic load on links and on said overburdened general server. The use of such web caches thus provides significant benefits to Internet Service Providers (ISP), enterprise networks and users.

In particular, to limit bandwidth demand due to the uncontrolled growth of Internet use, there exist some caching solutions that extend local application-layer caching to the network. This is notably the case for the content delivery networks developed by the Telco® society or transparent caching solutions. Moreover, in such systems, content caching allows improving the end user response time while reducing traffic and server load and, thus, increasing service availability.

Transparent caching solutions are network storage solutions that are directly embedded into a carrier network for giving to the operator of said network a full control on content caching and on the acceleration of content delivery. Moreover, transparent caching solutions allow using a single underlying caching infrastructure for content of different applications. The article "An Overview Of Transparent Caching and Its Role In The CDN Market", which is available at http://blog.streamingmedia.com/the business of online vi/2010/10/an-overview-of-transparent-caching.html#more, explains in further details the implementation of transparent caching solutions in CDN networks.

Moreover, Content Centric Network (CCN) architectures, which are based on named contents instead of host addresses, are currently under development. Such architectures are notably remarkable in that they allow embedding storage capabilities into the network by equipping routers with enhanced memories. CCN architectures are further described in the articles "Networking Named Content" (V. JACOBSON, D.K. SMETTERS, J.B. THORNTON, M.F. PLASS, N.H. BRIGGS, R.L. BRAYNARD, CoNEXT 2009, Rome, December 2009) and "A Survey of Information-Centric Networking" (B. AHLGREN, C. DANNEVITZ, C. IMBRENDA, D. KUTSCHER, B. OHLMAN, Dagstuhl Seminar Proceedings, Dagstuhl, Germany, 2011), such as on the website http://www.named-data.net devoted to the Named Data Networking project of the American National Science Fundation (NSF).

Content caching solutions are thus largely deployed, notably for storing contents from different applications, which complicates their management. Indeed, as a storage resource is shared between several applications, the managing dynamics of said resource must be adapted to track popularity variations of each content, said popularity varying a lot not only over time but also from one application to another.

To do so, the Least Recently Used (LRU) replacement policy is the most commonly used for managing storage resources, as it is relatively simple and easy to implement and has a notorious efficiency in case of a popularity pattern of content with skewed popularity distributions, i.e. a popularity pattern with a large catalogue and only few items of great popularity.

Lots of researches have been conducted on replacement policies in content caching solutions, as summarized for example in the section V of the article "Multimedia Information Storage and Retrieval: Techniques and Technologies" (P. K. C. TSE, ISBN 10:1599042258 / 1-59904-225-8, 2008).

In particular, a large amount of those researches concerns modifications of the LRU-typed policies, notably for the establishment of a pre-tuning based on the expected load for the content resource, so as to condition the cache managing dynamics to a specific assumption on request pattern and load. However, such modifications are not well adapted for managing a cache system that stores content from a lot of different applications and whose popularity and load vary over time.

Other researches based on LRU policies focus on modification of the standard LRU replacement policy that yield to better performances, but generate higher complexity in counterpart. An example of a mechanism based on such a modification, called Adaptive Replacement Cache (ARC) is described in detail in the article "Outperforming LRU with an Adaptive Replacement Cache Algorithm" (N. MEGIDDO, D. S. MODHA, IEEE Computer, Volume 37, pp. 58-65, April 2004), said mechanism proposing to handle the problem of popularity variations over time by continually monitoring and exploiting the recency and frequency features of the workload. Such a mechanism demonstrates higher adaptation to request pattern than a mechanism based on the standard policy and allows eliminating the need for a workload-specific pre-tuning.

However, the ARC mechanism uses an algorithm with a complexity of O(C), C being the size of the memory cache, whereas the complexity of the algorithm of the standard LRU replacement policy is O(1). Moreover, the effective monitoring of request traffic is difficult to achieve in presence of a low request rate.

Another work on modification of LRU policy proposes to exploit cache partitioning to provide service differentiation to accommodate items characterized by different requirements, as explained in the article "Optimal Partitioning of Cache Memory" (H.S. STONE, J. TUREK, J.L. WOLF, IEEE transactions of computer 1992, volume 41, issue 9).

US 6609177 discloses cache history being extended by retaining access history information for storage locations in the underlying level that are no longer represented in the cache. A cache is provided having a plurality of cache entries. Each of the cache entries has cache entry address information. A cache extender is provided having, a plurality of extender entries. Each extender entry has an extender address portion and an extender auxiliary portion. Each extender address portion may have extender entry address information. The cache entry address information of each of the cache entries relates to the extender entry address information of one among the extender address portions, and a storage area of an underlying level of a memory hierarchy is related to the extender entry address information of each of the extender address portions. Additionally, each of the extender auxiliary portions has historical information.
The invention aims to improve the prior art by proposing a process for managing the storage of items in a memory cache of a cache system, said process allowing a fast convergence of a cache dynamics based on a LRU typed policy to the stationary state, i.e. the state wherein all the most popular items are stored in the memory cache, and thus even in presence of popularity patterns varying over time and/or low request rates, as in mobile environments.

Indeed, the convergence to the stationary state depends on the request rate, so that when said rate is slow, there can be a significant difference between the experiences and the optimal LRU hit probability, i.e. the probability to find a popular item in the memory cache in the stationary state.

For that purpose, and according to a first aspect, the invention relates to a process for managing the storage of a list of N items in a memory cache of C items of said list, said N items being ordered in said list according to a rank i which depends of their last request time by a user, C, N and i being strictly positive integers, said process providing, upon the reception of a request for an item, for calculating a popularity probability f(i) for said requested item, f being an acceleration function, and for deciding to move or not said requested item at a higher rank i according to said popularity probability.

According to a second aspect, the invention relates to a cache system comprising a memory cache for storing C items of a list of N items, said cache system comprising means for receiving requests for items from users and means for ordering items in said list according to a rank i which depends of their last request time, N, C and i being strictly positive integers, the cache system further comprising means for calculating, upon reception of a request for an item, a popularity probability f(i) for said item, f being an acceleration function, the means for ordering being adapted to decide to move or not said requested item at a higher rank i according to said popularity probability.

Other aspects and advantages of the invention will become apparent in the following description made with reference to the appended figures, wherein:
- figure 1 represents schematically the different steps of a process according to the invention;
- figure 2 represents schematically the ordering of N items of a list according to the process of figure 1.

In relation to those figures, a process for managing the storage of a list N of N items I[i] in a memory cache M of C items of said list, N and C being strictly positive integers and C corresponding to the size of said memory cache, is described below, such as a cache system comprising a memory cache M for storing C items I[i] of said list and means for implementing such a process.

The process provides that the N items I[i] of the list L are ordered in said list according to a rank i which depends on their last request time by a user, i being a strictly positive integer, I[1] being for example the item of rank 1 and the most recently requested item, I[i] being the item of rank i with 1≤i≤N and I[N] being the item of rank N and the least recently requested item. Thus, the process follows a Least Recently Used typed policy.

To do so, the cache system comprises means for receiving requests for items I[i] from users and means for ordering items I[i] in the list L according to the above defined rank i, so that only the items I[i] with a rank i such that 1≤i≤C are stored in the memory cache.

In a standard LRU replacement policy, upon reception of a request for an item, the requested item I[i] is automatically moved to the first rank of the list L. Moreover, if the requested item I[i] was not initially present in the memory cache M, i.e. if the rank i of said item is greater than C, and if said memory cache was already full, the least recently requested item I[C] of the memory cache M is removed from said memory cache, whereas the requested item I[i] is moved at the first rank in said memory cache.

However, with such a conventional policy, the memory cache M experiences a long transient phase before reaching its stationary state, wherein all the most popular items I[i] are stored in said memory cache, said transient phase being all the longer when the item request rate is low. Moreover, the longer the transient phase is, the larger the degradation of performances of the memory cache M is.

In particular, simulation results allowed confirming that the convergence of the LRU cache dynamics, and thus the performances of a memory cache M, are negatively impacted by the imperfect knowledge of the popularity distribution pattern, said pattern being notably reflected by experienced popularity probabilities. For example, a hit probability, which reflects the probability of an item I[i] for being found in the memory cache M, or a miss probability, which reflect on the contrary to probability of an item I[i] for not being found in said memory cache, are popularity probabilities.

To overcome these drawbacks, the process provides, upon reception of a request for an item I[i], for calculating a popularity probability f(i) for said requested item, f being an acceleration function, and for deciding to move or not said requested item at a higher rank i according to said popularity probability.

In particular, the acceleration function f is chosen so that, for all ranks i, the value of the popularity probability f(i) converges quickly to its stationary value over time, and notably faster than the popularity probability of a conventional cache system with a LRU dynamics.

Thus, the process proposes a mechanism which allows accelerating the cache dynamics of a cache system, said mechanism exploiting a measure of the local recency of an item I[i] to determine the probability to move said item to the front of the list L.

To do so, the cache system comprises means for calculating, upon reception of a request for an item I[i], a popularity probability f(i) for said item, the means for ordering being adapted to decide to move or not said requested item at a higher rank i according to said popularity probability.

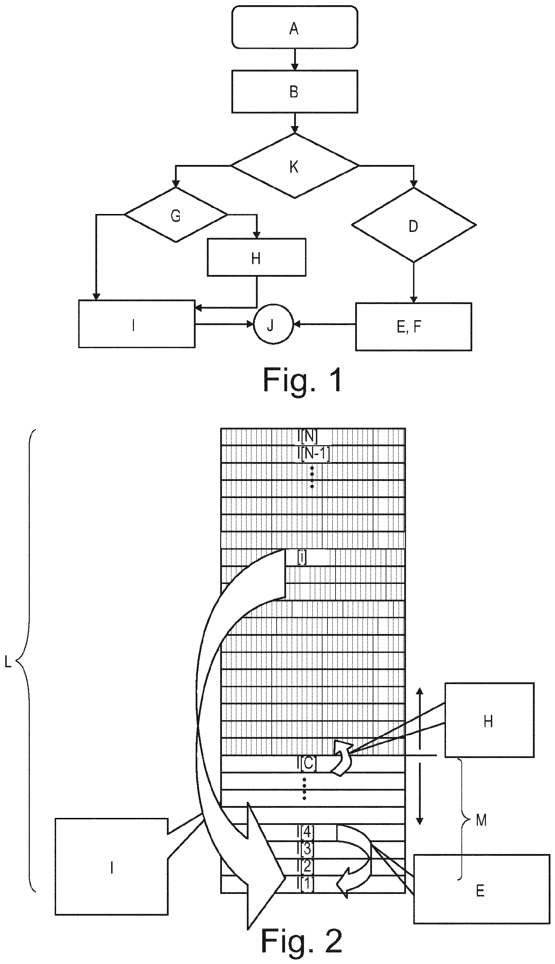

In relation to figure 1, the process comprises a first step A wherein the cache system receives a request for an item I[i], said first step triggering a step B wherein the rank i of the requested item I[i] is verified, which amounts to verify the presence of said item in the memory cache M (if the rank i is such that 1≤i≤C) or the absence of said item in said memory cache (if the rank i is such that i>C).

Thus, the process triggers the following step K, wherein the popularity probability f(i) is calculated by the means for calculating of the cache system according to the rank i, and thus to the presence or absence of the requested item I[i] in the memory cache M.

In particular, the process provides that, for a rank i such that 1≤i≤C, i.e. when the requested item I[i] is present in the memory cache M, the acceleration function f is such that 0≤f(i)≤1 and is decreasing with respect to the rank i, the requested item I[i] being moved at a higher rank i if its popularity probability f(i) is greater than a predetermined value.

Moreover, the process can provide that the requested item I[i] is moved at the first rank of the list L if its popularity probability is greater than the predetermined value.

In relation to figures 1 and 2, after the calculation step K, the process provides a step D wherein the means for ordering of the cache system compare the popularity probability f(i) to the predetermined value, so as to decide or not to move the requested item I[i] to a higher rank i. As represented on figure 2, when the popularity probability f(i) is greater than the predetermined value, the process triggers a moving step E wherein the means for ordering of the cache system move the requested item I[i] (the item I[4] on figure 2) at the first rank of the list L.

Otherwise, if the popularity probability f(i) is lower than the predetermined value, the process triggers a step F wherein the means for ordering of the cache system let the requested item I[i] at its initial rank i.

In particular, for a rank i such that 1≤i≤C, the acceleration function f can be such that:
- f(i)=exp(-λ*(i-1)); or
- f(i)=i^{(-λ)};
wherein λ is a positive parameter.

Moreover, the process provides that, for a rank i such that i>C, i.e. when the requested item I[i] is absent from the memory cache M, the acceleration function f is such that f(i)=1 and the requested item I[i] is moved at the first rank of the list L, i.e. in the memory cache M.

In relation to figures 1 and 2, after the calculation step K, the process provides a step G wherein the means for ordering verify if the memory cache M is full or not, i.e. if there are already C items I[1]-I[C] in said memory cache. If the memory cache M is effectively full, the process triggers a step H wherein the means for ordering of the cache system remove the least recently used item I[C] of the memory cache M from said memory cache, and thus a following step I wherein the means for ordering move the requested item I[i] at the first rank of the list L, and thus into the memory cache M.

Otherwise, if the memory cache M is not full, the process provides to go directly from step G to step I for moving the requested item I[i] at the first rank of the list L.

Thus, after one of the steps E, F, I, the process end in step J until the means for receiving of the cache system receive another request for another item I[i], so that said process is restarted at step A.

Thus, the process provides a faster convergence time to the ideal cache configuration of stored items than a conventional LRU policy and lower variance, and thus allows a faster and automatic adaptation of the cache system to popularity changes in the content request pattern.

Moreover, the process provides a higher hit probability for the memory cache M, and thus a smaller delivery time of requested items, which provides to users a better performance for a same storage cost than conventional cache systems. Besides, the process provides gains in bandwidth reduction.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for managing the storage of a list (L) of N items (I[i]) in a memory cache (M) of C items of said list, said N items being ordered in said list according to a rank i which depends of their last request time by a user, C, N and i being strictly positive integers, said process being **characterized in that** it provides, upon the reception of a request for an item (I[i]), for calculating a popularity probability f(i) for said requested item, f being an acceleration function, and for deciding to move or not said requested item at a higher rank i according to said popularity probability.

2. Process according to claim 1, **characterized in that**, for a rank i such that 1≤i≤C, the acceleration function f is such that 0≤f(i)≤1 and is decreasing with respect to the rank i, the requested item (I[i]) being moved at a higher rank i if its popularity probability f(i) is greater than a determined value.

3. Process according to claim 2, **characterized in that** the requested item (I[i]) is moved at the first rank of the list (L) if its popularity probability f(i) is greater than the predetermined value.

4. Process according to claim 2 or 3, **characterized in that**, for a rank i such that 1≤i≤C, the acceleration function f is such that f(i)=exp(-λ*(i-1)), wherein is a positive parameter.

5. Process according to claim 2 or 3, **characterized in that**, for a rank i such that 1≤i≤C, the acceleration function f is such that f(i)=i^{(-λ)}, wherein λ is a positive parameter.

6. Process according to any of claims 1 to 5, **characterized in that**, for a rank i such that i>C, the acceleration function f is such that f(i)=1 and the requested item (I[i]) is moved at the first rank of the list (L).

7. Cache system comprising a memory cache (M) for storing C items (I[i]) of a list (L) of N items, said cache system comprising means for receiving requests for items (I[i]) from users and means for ordering items (I[i]) in said list according to a rank i which depends from their last request time, N, C and i being strictly positive integers, the cache system further comprising means for calculating, upon reception of a request for an item (I[i]), a popularity probability f(i) for said item, f being an acceleration function, the means for ordering being adapted to decide to move or not said requested item at a higher rank i according to said popularity probability.

8. Cache system according to claim 7, **characterized in that**, for a rank i such that 1≤i≤C, the acceleration function f is such that 0≤f(i)≤1 and is decreasing with respect to the rank i, the means for ordering being adapted to move the requested item (I[i]) at a higher rank i if is popularity probability f(i) is greater than a determined value.

9. Cache system according to claim 8, **characterized in that** the means for ordering are adapted to move the requested item (I[i]) at the first rank of the list (L) if its popularity probability f(i) is greater than the predetermined value.

10. Cache system according to claim 8 or 9, **characterized in that**, for a rank i such that 1≤i≤C, the acceleration function f is such that f(i)=exp(-λ*(i-1)), wherein λ is a positive parameter.

11. Cache system according to claim 8 or 9, **characterized in that**, for a rank i such that 1≤i≤C, the acceleration function f is such that f(i)=i^{(-λ)}, wherein λ is a positive parameter.

12. Cache system according to any of claims 7 to 11, **characterized in that**, for a rank i such that i>C, the acceleration function f is such that f(i)=1 and the means for ordering are adapted to move the requested item (I[i]) at the first rank of the list (L).

## Patentansprüche

1. Verfahren für die Verwaltung des Speicherns einer Liste (L) mit N Elementen (I[i]) in einem Cache-Speicher (M) mit C Elementen besagter Liste, wobei besagte N Elemente in besagter Liste nach einer Rangordnung i geordnet sind, welche vom Zeitpunkt der letzten Anforderung durch einen Benutzer abhängt, wobei C, N und i grundsätzlich positive ganze Zahlen sind, wobei besagtes Verfahren **dadurch gekennzeichnet ist, dass** es auf den Empfang einer Anforderung eines Elements (I[i]) hin für die Berechnung einer Popularitätswahrscheinlichkeit f(i) für besagtes angefordertes Element sorgt, wobei f eine Beschleunigungsfunktion ist, und wobei besagtes Verfahren weiterhin dafür sorgt, zu entscheiden, besagtes angefordertes Element gemäß besagter Popularitätswahrscheinlichkeit auf eine höhere Rangordnung i zu setzen oder nicht.

2. Verfahren nach Anspruch 1, **dadurch gekennzeichnet, dass** für eine Rangordnung i mit 1≤i≤C die Beschleunigungsfunktion f dergestalt ist, dass 0≤f(i)≤1 und sie bezüglich der Rangordnung i abnehmend ist, wobei das angeforderte Element (I[i]) auf eine höhere Rangordnung i gesetzt wird, wenn seine Popularitätswahrscheinlichkeit f(i) größer ist als ein vorbestimmter Wert.

3. Verfahren nach Anspruch 2, **dadurch gekennzeichnet, dass** das angeforderte Element (I[i]) an die erste Stelle der Rangordnung der Liste (L) gesetzt wird, wenn seine Popularitätswahrscheinlichkeit f(i) größer als der vorbestimmte Wert ist.

4. Verfahren nach Anspruch 2 oder 3, **dadurch gekennzeichnet, dass** für eine Rangordnung i mit 1≤i≤C für die Beschleunigungsfunktion f(i)=exp(-λ*(i-1)) gilt, wobei λ ein positiver Parameter ist.

5. Verfahren nach Anspruch 2 oder 3, **dadurch gekennzeichnet, dass** für eine Rangordnung i mit 1≤i≤C für die Beschleunigungsfunktion f(i)=i^{(-λ)} gilt, wobei λ ein positiver Parameter ist.

6. Verfahren nach einem jeglichen der Ansprüche 1 bis 5, **dadurch gekennzeichnet, dass** für eine Rangordnung i mit i>C die Beschleunigungsfunktion f **dadurch gekennzeichnet ist, dass** f(i)=1, und dass das angeforderte Element (I[i]) an die erste Stelle der Rangordnung der Liste (L) gesetzt wird.

7. Cache-System, einen Cache-Speicher (M) für das Speichern von C Elementen (I[i]) einer Liste (L) mit N Elementen umfassend, wobei besagtes Cache-System Mittel für den Empfang einer Anforderung von Elementen (I[i]) von Benutzern sowie Mittel für das Ordern von Elementen (I[i]) in besagter Liste gemäß Rangordnung i umfasst, welche vom Zeitpunkt der letzten Anforderung abhängt, wobei N, C und i grundsätzlich positive ganze Zahlen sind, wobei das Cache-System weiterhin Mittel umfasst, um auf den Empfang einer Anforderung eines Elements (I[i]) hin für die Berechnung eine Popularitätswahrscheinlichkeit f(i) für besagtes Element zu berechnen, wobei f eine Beschleunigungsfunktion ist, und wobei besagte Ordermittel dafür ausgelegt sind, zu entscheiden, besagtes angefordertes Element gemäß besagter Popularitätswahrscheinlichkeit auf eine höhere Rangordnung i zu setzen oder nicht.

8. Cache-System nach Anspruch 7, **dadurch gekennzeichnet, dass** für eine Rangordnung i mit 1≤i≤C, die Beschleunigungsfunktion f dergestalt ist, dass 0≤f(i)≤1 und sie bezüglich der Rangordnung i abnehmend ist, wobei die Ordermittel dafür ausgelegt sind, das angeforderte Element (I[i]) auf eine höhere Rangordnung i zu setzen, wenn seine Popularitätswahrscheinlichkeit f(i) größer ist als ein vorbestimmter Wert.

9. Cache-System nach Anspruch 8, **dadurch gekennzeichnet, dass** die Ordermittel dafür ausgelegt sind, um das angeforderte Element (I[i]) an die erste Stelle der Rangordnung der Liste (L) zu setzen, wenn seine Popularitätswahrscheinlichkeit f(i) größer als der vorbestimmte Wert ist.

10. Verfahren nach Anspruch 8 oder 9, **dadurch gekennzeichnet, dass** für eine Rangordnung i mit 1≤i≤C für die Beschleunigungsfunktion f(i)=exp(-λ*(i-1)) gilt, wobei λ ein positiver Parameter ist.

11. Cache-System nach Anspruch 8 oder 9, **dadurch gekennzeichnet, dass** für eine Rangordnung i mit 1≤i≤C für die Beschleunigungsfunktion f gilt, dass f(i)=i^{(-λ)}, wobei λ ein positiver Parameter ist.

12. Cache-System nach einem jeglichen der Ansprüche 7 bis 11, **dadurch gekennzeichnet, dass** für eine Rangordnung i mit i>C die Beschleunigungsfunktion f **dadurch gekennzeichnet ist, dass** f(i)=1, und dass die Ordermittel dafür ausgelegt sind, um das angeforderte Element (I[i]) an die erste Stelle der Rangordnung der Liste (L) zu setzen.

## Revendications

1. Processus pour gérer le stockage d'une liste (L) de N articles (I[i]) dans un cache de mémoire (M) de C articles de ladite liste, lesdits N articles étant ordonnés dans ladite liste selon un rang i qui dépend de leur dernier temps de demande par un utilisateur, C, N et i étant des entiers strictement positifs, ledit processus étant **caractérisé en ce qu'**il prévoit, lors de la réception d'une demande d'un article (I[i]), de calculer une probabilité de popularité f(i) pour ledit article demandé, f étant une fonction d'accélération, et de décider de déplacer ou non ledit article demandé au niveau d'un rang i supérieur selon ladite probabilité de popularité.

2. Processus selon la revendication 1, **caractérisé en ce que**, pour un rang i tel que 1≤i≤C, la fonction d'accélération f est telle que 0≤f(i)≤1 et décroît par rapport au rang i, l'article demandé (I[i]) étant déplacé au niveau d'un rang i supérieur si sa probabilité de popularité f(i) plus grande qu'une valeur déterminée.

3. Processus selon la revendication 2, **caractérisé en ce que** l'article demandé (I[i]) est déplacé au niveau du premier rang de la liste (L) si sa probabilité de popularité f(i) est plus grande que la valeur prédéterminée.

4. Processus selon la revendication 2 ou 3, **caractérisé en ce que**, pour un rang i tel que 1≤i≤C, la fonction d'accélération f est telle que f(i) = exp(-λ*(i-1)), où λ est un paramètre positif.

5. Processus selon la revendication 2 ou 3, **caractérisé en ce que**, pour un rang i tel que 1≤i≤C, la fonction d'accélération f est telle que f(i) = i^{(-λ)}, où λ est un paramètre positif.

6. Processus selon l'une quelconque des revendications 1 à 5, **caractérisé en ce que**, pour un rang i tel que i>C, la fonction d'accélération f est telle que f(i) = 1 et l'article demandé (I[i]) est déplacé au niveau du premier rang de la liste (L).

7. Système de cache comprenant un cache de mémoire (M) pour stocker C articles (I[i]) d'une liste (L) de N articles, ledit système de cache comprenant des moyens pour recevoir des demandes d'articles (I[i]) en provenance d'utilisateurs et des moyens pour ordonner des articles (I[i]) dans ladite liste selon un rang i qui dépend de leur dernier temps de demande, N, C et i étant des entiers strictement positifs, le système de cache comprenant en outre des moyens pour calculer, lors de la réception d'une demande d'un article (I[i]), une probabilité de popularité f(i) pour ledit article, f étant une fonction d'accélération, les moyens pour ordonner étant adaptés pour décider de déplacer ou non ledit article demandé au niveau d'un rang i supérieur selon ladite probabilité de popularité.

8. Système de cache selon la revendication 7, **caractérisé en ce que**, pour un rang i tel que 1≤i≤C, la fonction d'accélération f est telle que 0≤f(i)≤1 et décroît par rapport au rang i, les moyens pour ordonner étant adaptés pour déplacer l'article demandé (I[i]) au niveau d'un rang i supérieur si sa probabilité de popularité f(i) est plus grande qu'une valeur déterminée.

9. Système de cache selon la revendication 8, **caractérisé en ce que** les moyens pour ordonner sont adaptés pour déplacer l'article demandé (I[i]) au niveau du premier rang de la liste (L) si sa probabilité de popularité f(i) est plus grande que la valeur prédéterminée.

10. Système de cache selon la revendication 8 ou 9, **caractérisé en ce que**, pour un rang i tel que 1≤i≤C, la fonction d'accélération f est telle que f(i) = exp(-λ*(i-1)), où A est un paramètre positif.

11. Système de cache selon la revendication 8 ou 9, **caractérisé en ce que**, pour un rang i tel que 1≤i≤C, la fonction d'accélération f est telle que f(i) = i^{(-λ)}, où A est un paramètre positif.

12. Système de cache selon l'une quelconque des revendications 7 à 11, **caractérisé en ce que**, pour un rang i tel que i>C, la fonction d'accélération f est telle que f(i) = 1 et les moyens pour ordonner sont adaptés pour déplacer l'article demandé (I[i]) au niveau du premier rang de la liste (L).
